# FASCICULE DE BREVET EUROPEEN

(11) **EP 0 402 220 B1**
(45) Date de publication et mention de la délivrance du brevet: **01.03.1995**
(21) Numéro de dépôt: 90401497.4
(22) Date de dépôt: 05.06.1990
(51) Int. Cl.: H02P 8/00

(54) **Procédé et dispositif de contrôle d'un moteur pas à pas**
Verfahren und Vorrichtung zur Regelung eines Schrittmotors
Method and device to control a step motor

(30) Priorité: 07.06.1989 FR 8907553; 23.05.1990 FR 9006432
(43) Date de publication de la demande: 12.12.1990
(73) Titulaire: VALEO THERMIQUE HABITACLE, 78320 Le Mesnil-Saint-Denis (FR)
(72) Inventeur: Sarbach, Jean-Charles, F-78690 Les Essarts-le-Roi (FR); Virey, Daniel, F-78690 Les Essarts-le-Roi (FR)
(74) Mandataire: Gamonal, Didier

(56) Documents cités:
- EP-A- 0 182 774
- EP-A- 0 305 876
- DE-A- 3 444 220
- US-A- 4 684 866
- LIVRE "ELEKTRISCHE SCHRITTMOTOREN" H.P. KREUTH,EXPERT VERLAG,1985 PAGES 188-195.

## Description

L'invention concerne un procédé et dispositif de contrôle d'un moteur pas à pas.

Elle vise en particulier, mais non exclusivement, les moteurs de ce genre pouvant être associés à un réducteur de manière à former un moto-réducteur.

Il est connu, notamment par le document DE-A-34 44 220 de hacher une tension d'alimentation continue par un signal d'horloge avant de l'appliquer aux différents enroulements ou phases du moteur pas à pas. En effectuant une régulation par largeurs d'impulsions, on réalise une commande à courant constant de ces enroulements. Il faut entendre par signal d'horloge le signal de modulation par largeurs d'impulsions de la régulation du courant dans l'enroulement, ce signal de modulation étant synchronisé par un signal d'horloge.

Utilisés dans leur domaine de fonctionnement, les moteurs pas à pas remplacent avantageusement l'ensemble moteur à courant continu/détecteur de position, la position du rotor étant connue à tout instant.

Toutefois, compte tenu des conditions difficiles rencontrées dans l'utilisation à un équipement automobile, telles que tension continue variable, température variable, trépidations, l'utilisation de ces moteurs pas à pas demeure rare.

La présente invention a pour but d'apporter une solution à ce problème. Ce problème est résolu par les caractéristiques des revendications 1 et 9.

L'invention s'applique à la situation où un moteur pas à pas possède des enroulements ou phases alimentés à partir d'une tension continue, hachée par un signal d'horloge, à travers un circuit de commande et un circuit de puissance, avec une boucle de réaction qui ramène vers le circuit de commande la valeur efficace du courant appliqué aux enroulements par le circuit de puissance. La notion de valeur efficace est appliquée ici pour définir une valeur moyenne, débarrassée des effets du hachage par le signal d'horloge.

Selon une caractéristique essentielle de l'invention, on surveille sur l'une au moins des liaisons entre le circuit de commande et les enroulements, les variations de tension existantes, filtrées par rapport au signal d'horloge qui les hache.

En effet, la Demanderesse a observé que l'allure de ces variations de tension, qui se présentent à priori sous une forme difficilement exploitable, peut néanmoins être utilisée pour obtenir des informations sur des fonctionnements anormaux du moteur pas à pas.

Dans les revendications dépendantes sont presentées différentes variantes des procédé dispositif de contrôle d'un moteur pas à pas, lesquels peuvent s'appliquer notamment dans le contexte difficile des équipements automobiles.

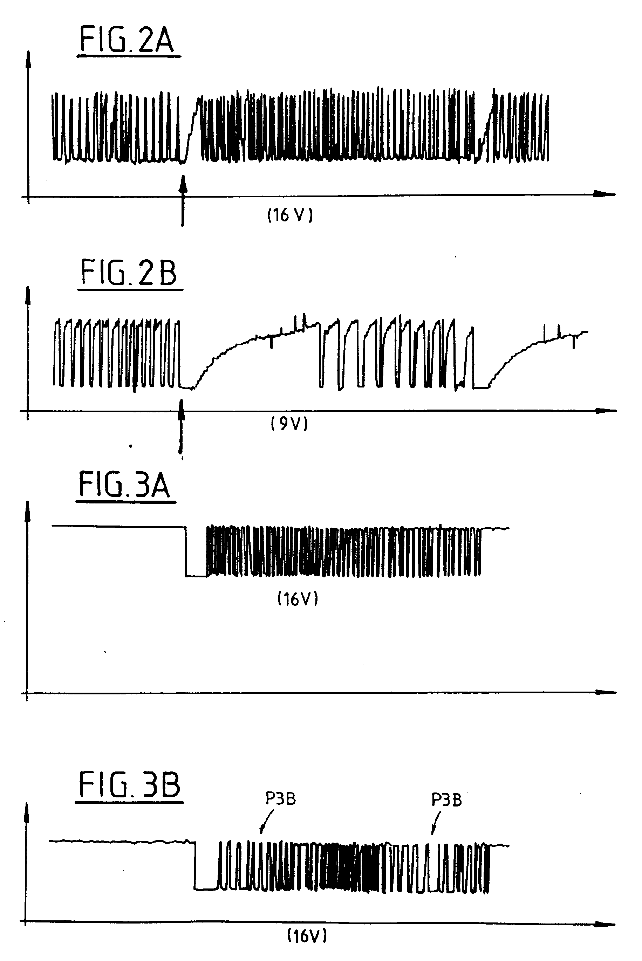

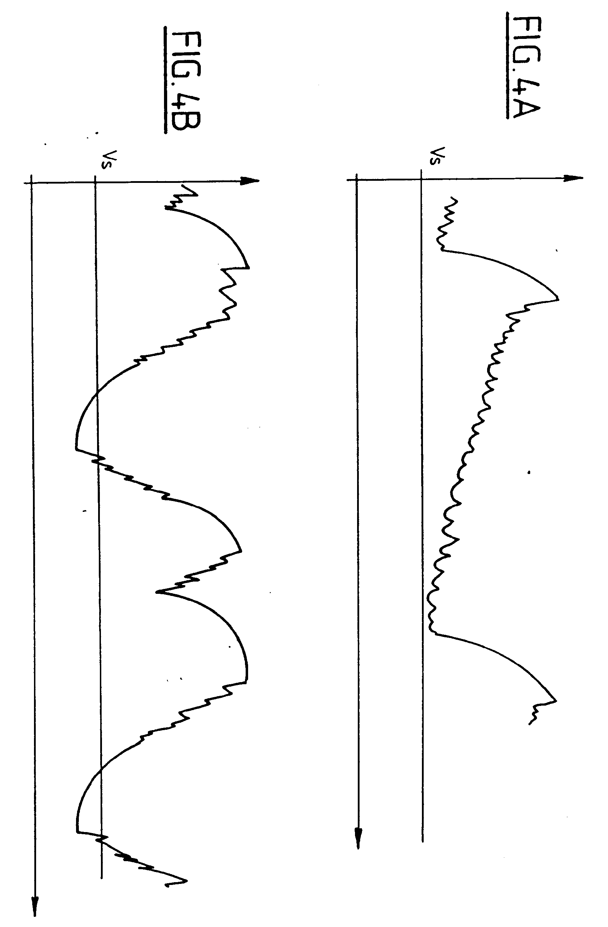

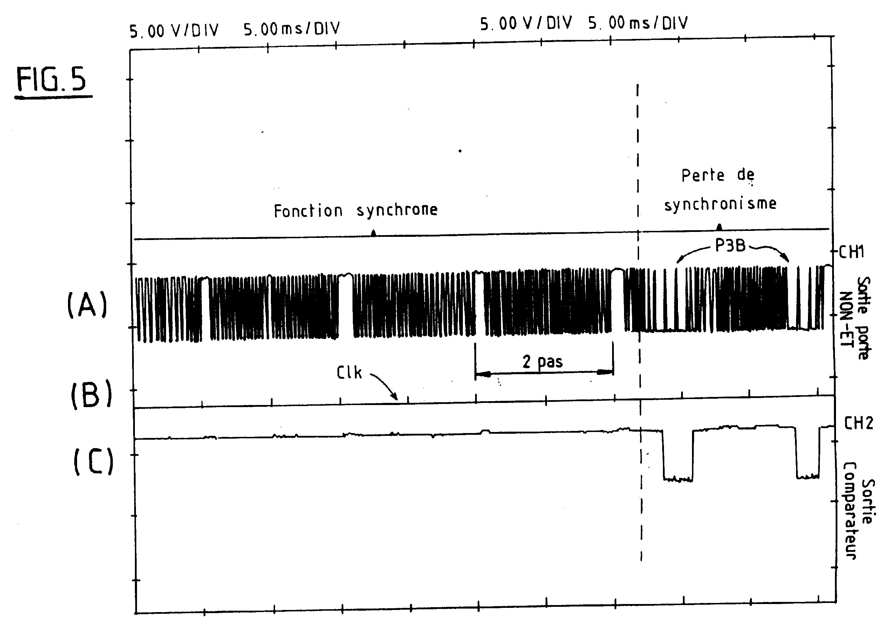

Les autres caractéristiques et avantages de l'invention ressortiront de la description qui va suivre, en se référant aux dessins annexés qui montrent :

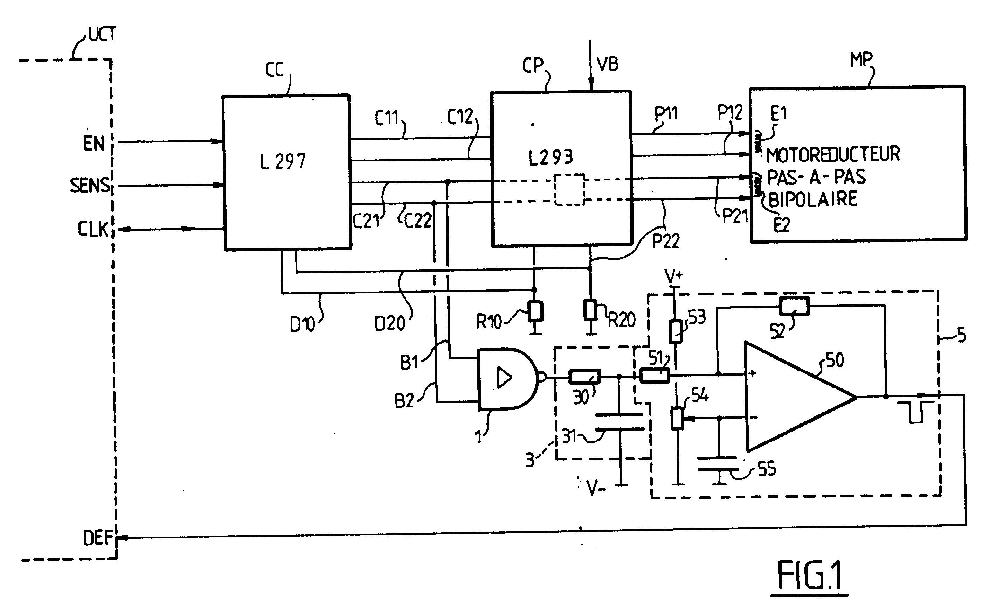

- à la figure 1, un schéma de principe d'un montage de commande d'un moto-réducteur pas à pas bipolaire incorporant la présente invention ;
- aux figures 2A et 2B, deux diagrammes temporels illustrant les courants dans l'un des enroulements, pour deux tensions d'alimentation très différentes ;
- aux figures 3A et 3B, deux diagrammes temporels illustrant la tension en un point du montage selon la présente invention, respectivement pour une situation de fonctionnement synchrone normal ou de fonctionnement anormal du moteur pas à pas ;
- aux figures 4A et 4B, deux diagrammes temporels représentant la tension en un autre point du montage de l'invention, respectivement pour une situation de fonctionnement synchrone normal ou de fonctionnement anormal du moto-réducteur pas à pas ;
- aux figures 5A à 5C, des illustrations de façon globale du fonctionnement du dispositif selon l'invention ;

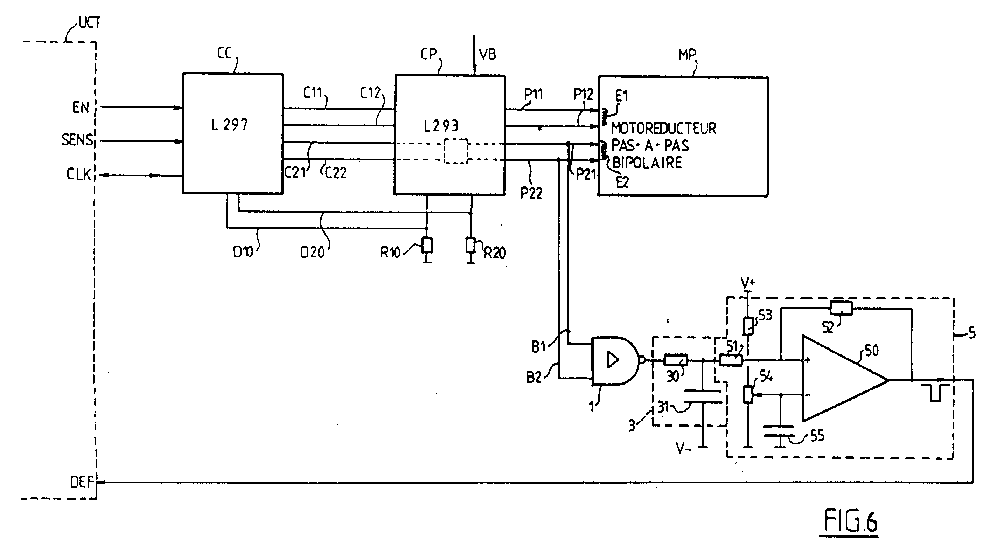

- à la figure 6, une variante de la figure 1.

Les dessins annexés comportent pour l'essentiel des éléments de caractère certain. En conséquence, ils sont à considérer comme incorporés à la description, et pourront servir non seulement à mieux faire comprendre celle-ci, mais aussi à contribuer à la définition de l'invention le cas échéant.

Sur la figure 1, un moto-réducteur pas à pas bipolaire MP, qui possède deux enroulements ou phases E1,E2, est commandé par un circuit de puissance CP, qui reçoit une tension continue d'alimentation telle que la tension VB d'une batterie. Le circuit de puissance est piloté par un circuit de commande CC, qui reçoit deux signaux d'entrée logiques, à savoir un signal EN qui autorise le fonctionnement du moto-réducteur, et un signal SENS qui définit son sens de rotation.

Un signal CLK, (du type signal d'horloge) qui représente le nombre de pas commandés pour le moto-réducteur MP, est fourni au circuit CC et sert d'information de retour.

Les circuits CP et CC peuvent être respectivement les modèles L293 et L297 vendus par la société S G S.

Il est connu d'associer au circuit de commande CP au moins une résistance,ici en l'occurrence deux résistances R10 et R 20, qui assurent le retour vers la masse des courants des enroulements E1 et E2. Ainsi, les tensions aux bornes des résistances R10 et R20 sont représentatives des courants d'enroulements. Deux liaisons D10 et D20 retransmettent cette information au circuit de commande CC, qui va alors piloter par deux paires de fils C11,C12, respectivement C21,C22, le circuit de puissance CP de façon qu'il applique des courants constants de commande respectivement à l'enroulement E1 par les lignes P11,P12 et à l'enroulement E2 par les lignes P21,P22.

Les figures 2A et 2B illustrent la forme des courants d'enroulement pour des tensions de batterie de 16 Volts et de 9 Volts, respectivement. Sur ces deux figures, la flèche marque le début de l'excitation d'un enroulement.

A la tension de 16 Volts, on observe une montée rapide du courant, suivie d'un hachage de celui-ci, jusqu'à l'excitation suivante du même enroulement.

Pour une tension d'alimentation de 9 Volts (figure 2B), le courant de commande met beaucoup plus longtemps à s'établir, et cet établissement est suivi d'une phase de hachage un peu plus espacée, jusqu'à la nouvelle excitation de la même phase.

Ces figures 2A et 2B concernent un fonctionnement normal, c'est-à-dire respectant le synchronisme, du moto-réducteur pas à pas. C'est le cas où le nombre de pas commandé est égal au nombre de pas effectués.

L'allure du courant de commande prend une forme beaucoup plus complexe lorsque le moto-réducteur pas à pas se trouve dans une situation anormale, telle qu'une perte de synchronisme ou un saut de pas pour une raison quelconque.

La Demanderesse a observé que, dans les cas où intervient un disfonctionnement du moto-réducteur, l'allure qualitative et quantitative du courant de phase est modifiée.

Les expérimentations conduites par la Demanderesse l'ont amenée à observer la différence de potentiel entre les lignes de commande telles que C21,C22, existant à la sortie de circuit de commande CC et le circuit de puissance CP.

De façon à priori inattentdue, il s'est avéré possible, sous réserve d'un traitement convenable de ce signal, de s'en servir pour identifier les disfonctionnements du moteur pas à pas, et même aller jusqu'à délivrer un signal sous forme logique représentant la position temporelle de tels disfonctionnements. Le montage illustré en partie basse de la figure 1 permet de réaliser cette fonction.

Ce montage comporte deux bornes d'entrée B1 et B2 repectivement connectées aux lignes C21 et C22, et aboutissant aux entrées d'une porte NON-ET 1. Celle-ci effectue la sommation logique des signaux présents sur les lignes C21 et C22, ce qui est équivalent à en prendre la différence de potentiel avec écrêtage, et inversion logique, puisqu'il s'agit d'une porte NON-ET.

La figure 3A illustre, pour une tension de batterie de 16 Volts, l'allure du signal de sortie de la porte NON-ET pendant l'excitation d'une phase du moteur pas à pas, pour un fonctionnement synchrone normal de celui-ci.

En cas de disfonctionnement, la sortie de la porte NON-ET est modifiée, comme visible sur la figure 3B, où il apparaît notamment une plage P3B pendant laquelle la sortie de la porte NON-ET est hachée de manière plus espacée.

Le signal de sortie de cette porte NON-ET est appliqué à un filtre passe-bas 3, qui peut être simplement constitué d'une résistance 30 et d'une capacité 31 allant vers la tension d'alimentation négative V - pour les circuits logiques.

La figure 4A illustre le signal de sortie de ce filtre pur le fonctionnement normal de la figure 3A.

Au début de l'excitation de l'enroulement E2 du moteur, la tension aux bornes de la capacité 31 monte rapidement. Elle décroît ensuite progressivement, d'une façon modulée par des résidus du signal d'horloge, jusqu'à descendre à une valeur relativement moyenne, au moment où l'enroulement en question sera à nouveau excité.

Par contre, et c'est là une observation fondamentale à la base de l'invention, en présence d'un disfonctionnement du moteur pas à pas, la tension du filtre 3 (figure 4B) va monter à peu près de la même manière, mais descendre beaucoup plus rapidement pour remonter au niveau de la phase P3B de la figure 3B, et suivre ensuite des variations relativement erratiques correspondant à un hachage également erratique du courant d'alimentation, en raison du disfonctionnement.

Il est alors possible de définir une valeur de seuil VS située en-dessous des niveaux normalement atteints par le signal de sortie du filtre 3 en fonctionnement synchrone normal, mais qui sera au contraire franchi vers le bas en présence d'un disfonctionnement du moteur pas à pas et il s'est avéré possible de définir la limite inférieure VS en fonction du cahier des charges de l'application voulue pour le moteur pas a pas, dans les conditions de fonctionnement normal du moto-réducteur.

Il est maintenant fait référence à la figure 5, qui illustre consécutivement un fonctionnement synchrone et une perte de synchronisme sur l'une des phases du moteur.

La ligne 5A de la figure 5 illustre la sortie de la porte NON-ET 1. La ligne 5B illustre le signal d'horloge (non pas pour le hachage, mais pour la commande du moteur pas à pas), et il rappelé sur cette figure que chaque enroulement n'est excité que tous les deux pas.

La figure 5C fait apparaître que la sortie d'un comparateur fixé sur la tension du seuil VS passera au niveau bas en correspondance temporelle des instants de perte de synchronisme du moteur pas à pas;

Si l'on revient maintenant à la figure 1, un tel comparateur 5 peut comporter une résistance 51 allant vers l'entrée non inverseuse d'un amplificateur différentiel 50, muni d'une résistance de réaction 52. L'entrée inverseuse de l'amplificateur 50 est reliée à un pont diviseur de tension comportant une résistance fixe 53 et une résistance ajustable 54, avec découplage par un condensateur 55. La résistance 54 est ajustée pour appliquer à l'entrée inverseuse du comparateur 50 la tension de seuil VS définie plus haut.

Dans la variante de la figure 6, les deux bornes d'entrée B1, B2 sont respectivement connectées aux lignes P21, P22 reliant le circuit de puissance CP et les enroulements E2 et aboutissent aux entrées de la porte NON-ET 1. Celle-ci, comme précédemment décrit, effectue la sommation logique des signaux présents sur les lignes P21 et P22, ce qui est équivalent à en prendre la différence de potentiel avec écrêtage et inversion logique, puisqu'il s'agit d'une porte NON-ET.

Le traitement du signal de sortie de cette porte s'effectue de la même manière que celle précédemment décrite.

Selon la technique antérieure, la commande du circuit CC s'effectue par exemple à partir d'un microprocesseur UCT, qui fournit les signaux EN et SENS et fournit et/ou reçoit le signal CLK représentant les pas commandés par le circuit CC.

A l'aide du montage selon la fig. 6, il recevra en outre, sur son entrée DEF, un signal de sortie du comparateur 5, qui lui permettra de savoir quels sont les pas non exécutés par le moteur pas à pas MP.

Cette disposition est très intéressante en ce qu'elle permet l'usage de moteurs pas à pas et en particulier de moto-réducteurs pas à pas dans des applications telles que celles des équipements automobiles, d'où ils étaient jusqu'à présent d'un fonctionnement très délicat compte tenu de l'environnement difficile : tension de batterie très variable, température très variable, vibrations, notamment.

Avec le dispositif selon l'invention, il devient possible d'utiliser un moteur et/ou un moto-réducteur pas à pas dans un tel contexte.

En outre, le dispositif permet de quantifier la course totale de l'organe commandé par le moto-réducteur, par un parcours préliminaire entre butées de cette course et un comptage du nombre de pas réels impliqués, et ce à tout moment.

Après cela, il devient possible de commander avec précision la position de tout organe, ou de détecter un surcouple rencontré dans la commande d'un tel organe, qui peut être relié par exemple à la présence d'un obstacle sur la course de l'organe commandé.

Mieux encore, le motoréducteur pas à pas devient ainsi un actionneur capable de communiquer à distance sa position, ou d'indiquer une ou plusieurs anomalies de fonctionnements, à un système de contrôle ou de commande physiquement séparé du moto-réducteur pas à pas, et de préférence articulé sur un microprocesseur.

Bien que les phénomènes en cause ne soient pas encore totalement compris, il semble que l'existence d'une boucle de réaction entre le circuit de puissance et le circuit de commande soit nécessaire à la mise en oeuvre de l'invention. Le dispositif de l'invention fonctionne bien lorsque cette boucle est utilisée de manière à réaliser une commande en courant constant des enroulements du moteur pas à pas. Mais il semble qu'elle puisse également fonctionner dans des conditions autres qu'une telle commande à courant constant.

Bien que l'invention ait été décrite au point de vue des courants jusqu'à maintenant d'une manière analogique, il peut être envisagé, et cela sans sortir du cadre de cette invention, que la comparaison entre les variations de tension filtrées et le seuil VS soit effectuée de manière numérique.

Par ailleurs, les essais conduits jusqu'à présent ont été principalement effectués sur des moto-réducteurs, qui possèdent la particularité d'introduire un certain jeu au niveau de l'arbre du moteur pas à pas, du fait de la présence du réducteur, lorsque l'organe commandé est bloqué. Sans qu'on puisse en être certain, il semble que l'existence d'un tel jeu, dû au moto-réducteur ou à une autre cause, intervienne dans le fonctionnement du dispositif.

Par ailleurs, il est suffisant pour certaines applications de surveiller seulement deux des lignes de commande intéressant un moto-réducteur pas à pas bipolaire. On peut bien entendu surveiller les quatre lignes de commande d'un tel moto-réducteur pas à pas. L'invention peut aussi s'appliquer à des moto-réducteurs pas à pas possédant plus de deux enroulements, éventuellement en multipliant là aussi le nombre de de lignes de commande surveillées.

## Revendications

1. Procédé de contrôle d'un moteur pas à pas, dans lequel les enroulements (E1,E2) du moteur pas à pas (MP) sont alimentés à partir d'une tension continue (VB) hâchée par un signal de modulation par largeurs d'impulsions synchronisé par un signal d'horloge, une régulation par largeurs d'impulsions permettant de réaliser une commande à courant constant des enroulements, à travers un circuit de commande (CC) et un circuit de puissance (CP), avec une boucle de réaction (R10,R20,D10,D20) qui ramène vers le circuit de commande la valeur efficace du courant appliqué aux enroulements par le circuit de puissance (CP), caractérisé en ce que l'on surveille sur l'une au moins des liaisons (C21,C22,P21,P22) entre le circuit de commande et les enroulements (E1,E2), les variations de tension existantes filtrées par rapport au signal d'horloge qui les hache.

2. Procédé selon la revendication 1, caractérisé en ce que l'on surveille sur l'une au moins des liaisons (C21,C22) entre le circuit de commande et le circuit de puissance les variations de tension existantes.

3. Procédé selon la revendication 1, caractérisé en ce que l'on surveille sur l'une au moins des liaisons (P21,P22) entre le circuit de puissance et les enroulements (E1,E2) les variations de tension existantes

4. Procédé selon l'une des revendications 1 à 3, caractérisé en ce que le circuit de commande est agencé pour piloter le circuit de puissance du courant constant d'enroulement.

5. Procédé selon l'une des revendications 1 à 4, caractérisé en ce que le moteur pas à pas (MP) est suivi d'un réducteur, formant ainsi un moto-réducteur pas à pas.

6. Procédé selon l'une des revendications 1 à 5, caractérisé en ce que l'on compare lesdites variations de tension filtrées à un seuil (VS).

7. Procédé selon la revendication 6, caractérisé en ce que la comparaison est effectuée de manière numérique.

8. Procédé selon la revendication 6, caractérisé en ce que l'information de comparaison est mise en forme logique.

9. Dispositif de contrôle d'un moteur pas à pas, caractérisé en ce qu'il comporte au moins une borne d'entrée (B1,B2) destinée à être reliée à au moins une des liaisons (C21,C22,P21,P22) entre le circuit de commande et les enroulements (E1,E2), et comportant un circuit de puissance (CP) alimentant les enroulements (E1,E2) d'un moteur pas à pas à partir d'une tension continue hachée par un signal de modulation par largeur d'impulsions synchronisé à un signal d'horloge, lesdites entrées (B1,B2) intéressant le même enroulement (E2) du moteur pas à pas et un moyen (1,3) pour filtrer la différence de potentiel entre ces deux liaisons par rapport au signal d'horloge.

10. Dispositif selon la revendication 9, caractérisé en ce qu'il comporte, en outre, un détecteur de disfonctionnement constitué d'un comparateur (5) branché à la sortie du moyen de filtrage et opérant par rapport à une tension de référence représentative d'un fonctionnement normal du moteur pas à pas.

11. Dispositif selon la revendication 9, caractérisé en ce que les bornes d'entrée (B1,B2) sont issues d'une porte NON-ET (1).

12. Dispositif selon la revendication 9, caractérisé en ce que le moyen pour filtrer la différence de potentiel est un filtre passe-bas (3).

## Patentansprüche

1. Verfahren zur Kontrolle eines Schrittmotors, bei dem die Wicklungen (E1, E2) des Schrittmotors (MP) an eine Gleichspannung (VB) angeschlossen sind, die durch ein mit einem Taktsignal synchronisiertes Impulsbreiten-Modulationssignal zerhackt wird, wobei eine Impulsbreitenregelung die Ausführung einer Konstantstromsteuerung der Wicklungen über einen Steuerkreis (CC) und einen Leistungskreis (CP) ermöglicht, mit einer Rückkopplungsschleife (R10, R20, D10, D20), die den Effektivwert des durch den Leistungskreis (CP) an die Wicklungen angelegten Stroms zum Steuerkreis zurückleitet , **dadurch gekennzeichnet,** daß an wenigstens einer der Verbindungen (C21, C22, P21, P22) zwischen dem Steuerkreis und den Wicklungen (E1, E2) die vorhandenen Spannungsänderungen überwacht werden, die im Verhältnis zum Taktsignal, das sie zerhackt, gefiltert werden.

2. Verfahren nach Anspruch 1 , **dadurch gekennzeichnet,** daß an wenigstens einer der Verbindungen (C21, C22) zwischen dem Steuerkreis und dem Leistungskreis die vorhandenen Spannungsänderungen überwacht werden.

3. Verfahren nach Anspruch 1 , **dadurch gekennzeichnet,** daß an wenigstens einer der Verbindungen (P21, P22) zwischen dem Leistungskreis und den Wicklungen (E1, E2) die vorhandenen Spannungsänderungen überwacht werden.

4. Verfahren nach einem der Ansprüche 1 bis 3 , **dadurch gekennzeichnet,** daß der Steuerkreis zur Ansteuerung des Leistungskreises für den Konstantstrom der Wicklung vorgesehen ist.

5. Verfahren nach einem der Ansprüche 1 bis 4 , **dadurch gekennzeichnet,** daß hinter dem Schrittmotor (MP) ein Getriebe angeordnet ist, so daß ein Getriebeschrittmotor gebildet wird.

6. Verfahren nach einem der Ansprüche 1 bis 5 , **dadurch gekennzeichnet**, daß die gefilterten Spannungsänderungen mit einem Schwellenwert (VS) verglichen werden.

7. Verfahren nach Anspruch 6 , **dadurch gekennzeichnet,** daß der Vergleich digital erfolgt.

8. Verfahren nach Anspruch 6 , **dadurch gekennzeichnet,** daß die Vergleichsinformation in eine logische Form gebracht wird.

9. Vorrichtung zur Kontrolle eines Schrittmotors, **dadurch gekennzeichnet,** daß sie wenigstens eine Eingangsklemme (B1, B2) für den Anschluß an mindestens eine der Verbindungen (C21, C22, P21, P22) zwischen dem Steuerkreis und den Wicklungen (E1, E2) umfaßt, sowie mit einem Leistungskreis (CP) für die Stromversorgung der Wicklungen (E1, E2) eines Schrittmotors anhand einer Gleichspannung, die durch ein mit einem Taktsignal synchronisierten Impulsbreiten-Modulationssignal zerhackt wird, wobei die genannten Eingänge (B1, B2) ein und dieselbe Wicklung (E2) des Schrittmotors betreffen, sowie ein Mittel (1, 3) zur Filterung der Potentialdifferenz zwischen den beiden Leitungen im Verhältnis zum Taktsignal.

10. Vorrichtung nach Anspruch 9 , **dadurch gekennzeichnet,** daß sie außerdem eine Erfassungseinheit für Funktionsstörungen umfaßt, die aus einer Vergleichsschaltung (5) besteht, die an den Ausgang des Filtermittels angeschlossen ist und im Verhältnis zu einer Bezugsspannung operiert, die für einen Normalbetrieb des Schrittmotors repräsentativ ist.

11. Vorrichtung nach Anspruch 9 , **dadurch gekennzeichnet,** daß die Eingangsklemmen (B1, B2) aus einem NICHT-UND-Glied (1) hervorgehen.

12. Vorrichtung nach Anspruch 9 , **dadurch gekennzeichnet,** daß es sich bei dem Mittel zum Filtern der potentialdifferenz um ein Tiefpaßfilter (3) handelt.

## Claims

1. A method of control for a stepping motor, in which the windings (E1, E2) of the stepping motor (MP) are supplied from a direct current voltage (VB) which is chopped by a pulse width modulating signal synchronised by a clock signal, with pulse width regulation giving a control signal for constant current in the windings, through a control circuit (CC) and a power circuit (CP), with a reaction loop (R10, R20, D10, D20) which feeds back to the control circuit the effective value of the current applied to the windings through the power circuit (CP), characterised in that the actual variations in voltage, filtered with respect to the clock signal which chops them, are monitored on at least one of the connections (C21, C22, P21, P22) between the control circuit and the windings (E1, E2).

2. A method according to Claim 1, characterised in that the actual variations in voltage are monitored on at least one of the connections (C21, C22) between the control circuit and the power circuit.

3. A method according to Claim 1, characterised in that the actual variations in voltage are monitored on at least one of the connections (P21, P22) between the power circuit and the windings (E1, E2).

4. A method according to one of Claims 1 to 3, characterised in that the control circuit is arranged so as to govern the power circuit at constant winding current.

5. A method according to one of Claims 1 to 4, characterised in that the stepping motor (NP) is followed by a reducer, constituting therewith a stepping motor reducer.

6. A method according to one of Claims 1 to 5, characterised in that the said filtered variations in voltage are compared with a threshold value (VS).

7. A method according to Claim 6, characterised in that the comparison is performed digitally.

8. A method according to Claim 6, characterised in that the comparative information is provided in logic form.

9. Apparatus for controlling a stepping motor, characterised in that it comprises at least one input terminal (B1, B2) arranged to be connected to at least one of the connections (C21, C22, P21, P22) between the control circuit and the windings (E1, E2), and including a power circuit (CP) which feeds the windings (E1, E2) of a stepping motor from a direct current voltage which is chopped by a pulse width modulating signal synchronised with a clock signal, the said inputs (B1, B2) being associated with the same winding (E2) of the stepping motor, and a means (1, 3) for filtering the potential difference between these two connections with respect to the clock signal.

10. Apparatus according to Claim 9, characterised in that it further comprises a malfunction detector comprising a comparator (5) which is connected to the output of the filter means, and which operates with respect to a reference voltage representing normal operation of the stepping motor.

11. Apparatus according to Claim 9, characterised in that the input terminals (B1, B2) are outputs of a NOT-AND gate (1).

12. Apparatus according to Claim 9, characterised in that the means for filtering the potential difference is a low pass filter (3).
